# EUROPÄISCHE PATENTSCHRIFT

(11) **EP 1 756 187 B1**
(45) Veröffentlichungstag und Bekanntmachung des Hinweises auf die Patenterteilung: **09.04.2008**
(21) Anmeldenummer: 05753210.3
(22) Anmeldetag: 21.05.2005
(51) Int. Cl.: C08G 18/40, C08G 18/63, C08G 18/42

(54) **NIEDERDICHTE POYURETHANSCHAUMSTOFFE UND DEREN VERWENDUNG IN SCHUHSOHLEN**
LOW-DENSITY POLYURETHANE FOAM MATERIALS AND THEIR USE IN SHOE SOLES
MOUSSES POLYURETHANE DE FAIBLE DENSITE ET LEUR UTILISATION DANS DES SEMELLES DE CHAUSSURES

(30) Priorität: 31.05.2004 IT MI20041096
(43) Veröffentlichungstag der Anmeldung: 28.02.2007
(73) Patentinhaber: BASF SE, 67056 Ludwigshafen (DE)
(72) Erfinder: SCHÜTTE, Markus, 49080 Osnabrück (DE); KAPPES, Anton, No. 80 Kennedy Road, Hong Kong (CN); ORTALDA, Marco, I-10137 Torino (IT)
(86) Internationale Anmeldenummer: PCT/EP2005/005519
(87) Internationale Veröffentlichungsnummer: WO 2005/116101

(56) Entgegenhaltungen:
- EP-A- 1 505 082
- EP-A- 1 541 606
- WO-A-99/33893

## Beschreibung

Die Erfindung betrifft sogenannte "niederdichte" Polyurethanschaumstoffe, bevorzugt "niederdichte" Polyurethan-Weichintegralschaumstoffe, d.h. Polyurethanschaumstoffe mit einer Dichte von 120 Gramm pro Liter (nachfolgend als g/L bezeichnet) bis weniger als 300 g/L, erhältlich durch Umsetzung von Polyisocyanaten (a) mit einer Polyolkomponente (b), enthaltend die Bestandteile Polyesterol (b-1) und Polymerpolyesterol (b-2), wobei der Anteil an Polymerpolyesterolen (b-2) mehr als 5 bis weniger als 50 Gew.-%, bezogen auf das Gesamtgewicht der Komponente (b) beträgt, und gegebenenfalls Kettenverlängerungsmittel (c), in Gegenwart von Wasser (d) als Treibmittel, sowie deren Verwendung in Schuhsohlen.

Die Herstellung von Schuhsohlen aus mikrozellulären PUR-Elastomeren mit Formteildichten oberhalb von 400 g/L ist im Stand der Technik bekannt und beispielsweise in EP-A-463479 beschrieben. Schuhsohlen sowie andere Dämpfungselemente für den Schuhsektor mit niedrigeren Dichten können grundsätzlich durch Erhöhung des Anteils an physikalischem und/oder chemischen Treibmittel erhalten werden. Aufgrund gesetzlicher Vorlagen (Montreal-Protokoll) wurde dabei in den letzten Jahren rein mit Wasser getriebenen Systemen der Vorzug gegenüber früher üblichen, mit physikalischen Treibmitteln erhaltenen Systemen gegeben.

Beispielsweise beschreibt DE-A-2402734 PUR-Systeme zur Herstellung von Schuhsohlen, in denen Isocyanat-Prepolymere auf Basis von Polyesterolen mit Polyol-Komponenten auf Basis von Polyetherolen umgesetzt werden. Die niedrigste in den Beispielen aufgeführte Formteildichte beträgt 400 g/L. Einen ähnlichen Ansatz verfolgt EP-A-0358328, wobei Isocyanat-Prepolymere verwendet werden, die Umsetzungsprodukte aus MDI und Mischungen aus Polyesterolen und Polyetherolen darstellen.

In EP-A-12119654 werden niederdichte PUR-Schuhsohlen unter Verwendung von speziellen Polyesterolen beschrieben, die durch Umsetzung von aromatische Dicarbonsäuren wie z.B. Terephthalsäure mit Glykolen hergestellt werden.

Femer offenbart EP-A-1225199 die Herstellung von niederdichten Polyurethanschuhsohlen, wobei als Treibmittel jedoch zwingend Kohlendioxid verwendet wird.

WO 97/32923 offenbart die Herstellung von niederdichten Polyurethanschuhsohlen, wobei wesentlich ist, dass ein spezielles Verhältnis von Zelldurchmesser des Kerns zu Zelldurchmesser der Haut eingehalten wird.

EP-A-358328 beschreibt niederdichte Polyurethanschuhsohlen auf Basis von Hybrid-Prepolymere aus Polyesterolen und Polyetherolen.

Eine Dichteverringerung der Schuhsohlen führt jedoch zu einer unerwünschten Abnahme der Gebrauchs- und Verarbeitungseigenschaften. Die Abnahme dieser Eigenschaften wird durch den erhöhten Wasseranteil zusätzlich verstärkt. Aus diesem Grunde konnten sich Schuhsohlen aus Polyurethan (PUR) mit Dichten < 300 g/L, beispielsweise für Sportschuhe, bislang nicht gegenüber konkurrierenden Materialien, wie z.B. Poly(ethylen-co-vinylacetat) (EVA) durchsetzen.

Aufgabe der Erfindung war es daher, einen Polyurethanschaumstoff bereitzustellen, der im Dichtebereich von 120 bis weniger als 300 g/L Anwendung als Polyurethanschuhsohle finden kann, wobei der erfindungsgemäße Schaumstoff sowohl im Kern als auch an der Oberfläche möglichst wenig, bevorzugt keine Defekte aufweisen soll. Femer soll das dem Schaumstoff zu Grunde liegende Reaktionsgemisch derart beschaffen sein, dass geometrisch aufwendigere Schuhformen im wesentlichen ohne Oberflächendefekte mit möglichst kurzer Entformzeit verwirklicht werden können. Die Entformzeit gibt die Zeit an, die das Formteil mindestens in der geschlossenen Form verbleiben muss, ohne dass es zu einer mechanischen Beschädigung des Schaumstoffs beim Entformen kommt.

Die dieser Erfindung zugrunde liegende Aufgabe konnte unerwartet durch die Verwendung einer speziellen Polyolkomponente aus Polyesterolen und Polymer Polyesterolen sowie bevorzugt zusätzlich einer speziellen Isocyanat-Komponente gelöst werden.

Gegenstand der Erfindung ist daher ein Polyurethanschaumstoff mit einer Dichte von 120 g/L bis weniger als 300 g/L,
erhältlich durch Umsetzung von
a) einer Polyisocyanatkomponente mit
b) einer Polyolkomponente, enthaltend die Bestandteile
   b-1) Polyesterole und
   b-2) Polymerpolyesterole, wobei der Anteil an Polymerpolyesterolen (b-2) mehr als 5 bis weniger als 50 Gew.-%, bezogen auf das Gesamtgewicht der Komponente (b) beträgt, und
c) gegebenenfalls Kettenverlängerungsmitteln, in Gegenwart von
d) Treibmittel, enthaltend Wasser,
wobei keine Schwefelatome aufweisenden Polyesterpolyole oder Polymerpolyesterole bei der Umsetzung enthalten sind.

Bei den erfindungsgemäßen Polyurethanschaumstoffen handelt es sich bevorzugt um Integralschaumstoffe, insbesondere um solche gemäß DIN 7726. In einer bevorzugten Ausführungsform betrifft die Erfindung Integralschaumstoffe auf Basis von Polyurethanen mit einer. Shore Härte im Bereich von 20-90 A, bevorzugt von 25 bis 60 Shore A, insbesondere 30 bis 55 Shore A, gemessen nach DIN 53505. Weiterhin weisen die erfindungsgemäßen Integralschaumstoffe bevorzugt Zugfestigkeiten von 0,5 bis 10 N/mm², bevorzugt von 1 bis 5 N/mm², gemessen nach DIN 53504 auf. Femer weisen die erfindungsgemäßen Integralschaumstoffe bevorzugt eine Dehnung von 100 bis 800 %, bevorzugt von 200 bis 500, gemessen nach DIN 53504 auf. Femer weisen die erfindungsgemäßen Integralschaumstoffe bevorzugt eine Rückprallelastizität nach DIN 53 512 von 20 bis 60 % auf. Schließlich weisen die erfindungsgemäßen Integralschaumstoffe bevorzugt eine Weiterreißfestigkeit von 1 bis 10 N/mm, bevorzugt von 1,5 bis 5 N/mm, gemessen nach ASTM D3574, auf.

Insbesondere handelt es sich bei den erfindungsgemäßen Polyurethanschaumstoffen um elastomere Polyurethan-Weichintegralschaumstoffe.

Die erfindungsgemäßen Polyurethanschaumstoffe weisen ein Dichte von 120 g/L bis weniger als 300 g/L auf. Bevorzugt weisen sie eine Dichte von 150 g/L bis 295 g/L, mehr bevorzugt von 180 g/L, bis 290 g/L, noch mehr bevorzugt von 190 g/L bis 288 g/L, besonders bevorzugt von 210 g/L bis 285 g/L, insbesondere von 220 g/L bis 280 g/L auf. Unter Dichte des Polyurethanschaumstoffes ist hierbei die gemittelte Dichte über den gesamten Schaumstoff zu verstehen, d.h. bei Integralschaumstoffen bezieht sich diese Angabe auf die mittlere Dichte des gesamten Schaumstoffs inklusive Kem und Außenschicht.

Die zur Herstellung der erfindungsgemäßen Polyurethanschaumstoffe verwendete Polyisocyanatkomponente (a) umfasst die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind 4,4'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Hexamethylendiisocyanat (HDI), Toluylendiisocyanat TDI) oder Mischungen daraus.

Bevorzugt wird 4,4'-MDI und/oder HDI verwendet. Das besonders bevorzugt verwendete 4,4'-MDI kann geringe Mengen, bis etwa 10 Gew.-%, allophanat- oder uretoniminmodifizierte Polyisocyanate enthalten. Es können auch geringe Mengen Polyphenylenpolymethylenpolyisocyanat (Roh-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymere eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Polyolen (a-2), zum Prepolymer umgesetzt werden. Das Polyol-Polyisocyanat-Verhältnis wird hierbei so gewählt, dass der NCO-Gehalt des Prepolymeren 8 bis 28 Gew.-%, vorzugsweise 14 bis 26 Gew.-%, besonders bevorzugt 17 bis 23 Gew.-% beträgt. Um Nebenreaktionen durch Luftsauerstoff auszuschließen, kann die Umsetzung unter Inertgas, vorzugsweise Stickstoff, durchgeführt werden.

Gegebenenfalls können der Umsetzung zum Polyisocyanatprepolymer auch noch Kettenverlängerungsmittel (a-3) zugegeben werden. Als Kettenverlängerungsmittel für das Prepolymer (a-3) sind zwei- oder dreiwertige Alkohole, bevorzugt verzweigte zwei-oder der dreiwertige Alkohole mit einem Molekulargewicht von weniger als 450 g/mol, besonders bevorzugt weniger als 400 g/mol, insbesondere weniger als 300 g/mol geeignet. Bevorzugt verwendet werden Dipropylenglykol und/oder Tripropylenglykol. Femer sind Addukte von Dipropylenglykol und/oder Tripropylenglykol mit Alkylenoxiden, bevorzugt Propylenoxid, geeignet.

Polyole (a-2) sind dem Fachmann bekannt und beispielsweise beschrieben in "Kunststoffhandbuch, 7, Polyurethane", Carl Hansel Verlag, 3. Auflage 1993, Kapitel 3.1.

Als Polyole (a-2) werden Polyesterole verwendet. Die verwendeten Polyesterole weisen bevorzugt eine OH-Zahl von 20 bis 100, bevorzugt von 30 bis 60 auf. Femer weisen sie im allgemeinen eine theoretische Funktionalität 1,9 bis 4, bevorzugt von größer als 2 bis 3.

Es ist bevorzugt, dass als Komponente (a-2) die nachstehend unter der Beschreibung der Komponente (b-1) erläuterten Polyesterole eingesetzt werden. Es ist femer bevorzugt, dass die Komponente (a-2) weniger als 10 Gew.-% Polyetherole, bezogen auf das Gesamtgewicht der Komponente (a-2) enthält. Insbesondere enthält die Komponente (a-2) keine Polyetherole und besteht besonders bevorzugt nur aus Polyesterolen.

In einer besonders bevorzugten Ausführungsform werden als Komponente (a-2) verzweigte Polyesterole verwendet. Die verzweigten Polyesterote weisen bevorzugt eine Funktionalität von mehr als 2 bis 3, insbesondere von 2,2 bis 2,8 auf. Des weiteren weisen die verzweigten Polyesterole bevorzugt ein zahlenmittleres Molekulargewicht von 500 bis 5000 g/mol, besonders bevorzugt von 2000 bis 3000 g/mol auf. Bezüglich der zur Herstellung des verzweigten Polyesters (a-2) verwendeten Einsatzstoffe (Säuren und Alkohole) wird auf die nachfolgenden Ausführungen zur Komponente (b-2) verwiesen.

Die Polyolkomponente (b) enthält Polyesterole (b-1) und Polymerpolyesterole (b-2).

Die verwendeten Polyesterole (b-1) werden im allgemeinen durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Phthalsäure, Isophthalsäure, und/oder Terephthalsäure und Gemischen hiervon hergestellt. Beispiele für geeignete zwei- und mehrwertige Alkohole sind Ethandiol, Diethylenglykol, 1,4-Butandiol, 1,5-Pentandiol, und/oder 1,6-Hexandiol und Gemische hiervon.

Im allgemeinen weisen die eingesetzten Polyesterole eine mittlere theoretische Funktionalität von 2 bis 4, bevorzugt von mehr als 2 bis weniger als 3 auf. Des weiteren weisen im allgemeinen die eingesetzten Polyesterole eine mittlere OH-Zahl von 20 bis 200, bevorzugt von 30 bis 90 auf.

In einer bevorzugten Ausführungsform weisen die verwendeten Polyesterole (b-1) eine Viskosität von 150 mPas bis 600 mPas, bevorzugt von 200 mPas bis 550 mPas, mehr bevorzugt von 220 mPas bis 500 mPas, besonders bevorzugt von 250 mPas bis 450 mPas und insbesondere von 270 mPas bis 350 mPas, gemessen nach DIN 53 015 bei 75°C, auf.

Die zweite Bestandteil der Polyolkomponente (b) ist ein Polymerpolyesterol (b-2). Hierbei handelt es sich um ein sogenanntes Polymerpolyol, welches üblicherweise einen Gehalt an, bevorzugt thermoplastischen, Polymeren von 5 bis 50 Gew.-%, bevorzugt 10 bis 45 Gew.%, besonders bevorzugt 25 bis 40 Gew.%, aufweist. Diese Polymerpolyesterole sind beispielsweise in EP-A-250 351 beschrieben und werden üblicherweise durch radikalische Polymerisation von geeigneten olefinischen Monomeren, beispielsweise Styrol, Acrylnitril, Acrylaten und/oder Acrylamid, in einem als Propfgrundlage dienenden Polyesterol hergestellt. Die Seitenketten entstehen im allgemeinen durch Übertragung der Radikale von wachsenden Polymerketten auf Polyesterole. Das Polymer-Polyol enthält neben dem Propfcopolymerisaten überwiegend die Homopolymere der Olefine, dispergiert in unverändertem Polyesterol.

In einer bevorzugten Ausführungsform werden als Monomere Acrylnitril, Styrol, insbesondere ausschließlich Styrol verwendet. Die Monomere werden gegebenenfalls in Gegenwart weiterer Monomerer, eines Makromers, eines Moderators und unter Einsatz eines Radikal-Initiators, meist Azo- oder Peroxidverbindungen, in einem Polyesterol als kontinuierlicher Phase polymerisiert.

Makromere, auch als Stabilisatoren bezeichnet, sind lineare oder verzweigte Polyole mit zahlenmittleren Molekulargewichten von bis zu 2000 g/mol, die mindestens eine endständige, reaktionsfähige olefinische ungesättigte Gruppe enthalten. Die ethylenisch ungesättigte Gruppe kann über Reaktion mit Anhydriden (Maleinsäureanhydrid, Fumarsäure), Acrylat- und Methacrylat-Derivaten sowie Isocyanat-Derivaten,wie 3-Isopropenyl-1,1-dimethylbenzyl-isocyanat, isocyanatoethylmethacrylat, an ein bereits bestehendes Polyol eingefügt werden.

Während der radikatischen Polymerisation werden die Makromere mit in die Copolymerkette eingebaut. Dadurch bilden sich Blockcopolymere mit einem Polyester und einem Poly-acrylnitril-styrol-Block, welche in der Grenzfläche von kontinuierlicher Phase und dispergierter Phase als Phasenvermittier wirken und das Agglomerieren der Polymerpolyesterolpartikel unterdrücken. Der Anteil der Makromere beträgt üblicherweise 1 bis 15 Gew.-%, bezogen auf das Gesamtgewicht der zur Herstellung des Polymerpolyols eingesetzten Monomere.

Es ist erfindungswesentlich, dass der Anteil an Polymerpolyesterole (b-2) mehr als 5 Gew.-%, bezogen auf das Gesamtgewicht der Komponente (b) beträgt. In einer bevorzugten Ausführungsform sind in der Komponente (b) die Bestandteile (b-1) in einer Menge von 30 bis 90 Gew.-%, mehr bevorzugt von 40 bis 85 Gew.-%, besonders bevorzugt von 55 bis 80 Gew.-% und (b-2) in einer Menge von 10 bis 70 Gew.-%, mehr bevorzugt von 15 bis 60 Gew.-%, besonders bevorzugt von 20 bis 45 Gew.-%, bezogen auf das Gesamtgewicht der Komponente (b), enthalten.

Als Komponente (c) werden gegebenenfalls Kettenverlängerungsmittel eingesetzt. Geeignete Kettenverlängerungsmittel sind im Stand der Technik bekannt. Bevorzugt werden 2-funktionelle Alkohole mit Molekulargewichten unter 400 g/mol, insbesondere im Bereich von 60 bis 150 g/mol, verwendet. Beispiele sind Ethylenglykol, 1,3-Propandiol, Diethylenglykol, Butandiol-1,4, Glycerin oder Trimethylolpropan, sowie Gemische davon. Bevorzugt wird Ethylenglykol verwendet.

Das Kettenverlängerungsmittel wird üblicherweise in einer Menge von 1 bis 15 Gew.-%, bevorzugt von 3 bis 12 Gew.-%, besonders bevorzugt von 4 bis 8 Gew.-%, bezogen auf das Gesamtgewicht der Komponenten (b) und (c), verwendet.

Die Umsetzung der Komponenten a) und b) und gegebenenfalls (c) erfolgt üblicherweise in Gegenwart von Treibmitteln (d), enthaltend Wasser (als Bestandteil (d-1) bezeichnet). Als Treibmittel (d) können neben Wasser (d-1) noch zusätzlich allgemein bekannte chemisch oder physikalisch wirkende Verbindungen eingesetzt werden (diese werden als Bestandteil (d-2) bezeichnet). Beispiele für physikalische Treibmittel sind inerte (cyclo)aliphatische Kohlenwasserstoffe mit 4 bis 8 Kohlenstoffatomen, die unter den Bedingungen der Polyurethanbildung verdampfen. Femer können auch Fluorkohlenwasserstoffe, wie beispielsweise Solkane^{®} 365 mfc, als Treibmittel eingesetzt werden. In einer bevorzugten Ausführungsform wird Wasser als alleiniges Treibmittel eingesetzt.

Es ist weiterhin bevorzugt, dass als Treibmittel (d) ausschließlich die vorstehend genannten Treibmittel (d-1) und/oder (d-2) eingesetzt werden.

Insbesondere werden im Rahmen dieser Erfindung nicht Stickstoff, Luft oder Kohlendioxid als Treibmittel eingesetzt.

Somit betrifft die Erfindung bevorzugt keine Ausführungsformen, die Kohlendioxid, welches beispielsweise in gelöster Form vorliegt, als Treibmittel verwenden.

In einer bevorzugten Ausführungsform wird Wasser (d-1) in einer Menge von 0,5 bis 3 Gew.-%, bevorzugt 0,6 bis 2 Gew.%, besonders bevorzugt 0,7 bis 1,5 Gew.-%, insbesondere 0,75 bis 1,3 Gew.-%, bezogen auf das Gesamtgewicht der Komponenten (b) und gegebenenfalls (c), eingesetzt.

In einer weiteren bevorzugten Ausführungsform werden der Umsetzung der Komponenten (a), (b) und gegebenenfalls (c) als zusätzliches Treibmittel (d-2) Mikrokugeln, die physikalisches Treibmittel enthalten, zugegeben. Die Mikrokugeln können auch im Gemisch mit den vorstehend genannten zusätzlichen Treibmitteln (d-2) eingesetzt werden.

Die Mikrokugeln (d-2) bestehen üblicherweise aus einer Hülle aus thermoplastischem Polymer und sind im Kern mit einem flüssigen, niedrig siedenden Gas auf Basis von Alkanen gefüllt. Die Herstellung solcher Mikrokugeln ist beispielsweise beschrieben in US 3 615 972. Die Mikrokugeln weisen im allgemeinen einen Durchmesser von 5 bis 50 µm auf. Beispiele für geeignete Mikrokugeln sind unter dem Handelsnamen Expancell® der Firma Akzo Nobel erhältlich.

Die Mikrokugeln werden im allgemeinen in einer Menge von 0,5 bis 5 %, bezogen auf das Gesamtgewicht der Komponenten (b), gegebenenfalls (c) und (d) zugesetzt.

Als Katalysatoren (e) für die Herstellung der erfindungsgemäßen Potyurethanschaumstoffe können die üblichen Polyurethanbildungskatalysatoren eingesetzt werden, beispielsweise organische Zinnverbindungen, wie Zinndiacetat, Zinndioctoat, Dibutylzinndilaurat, und/oder tertiäre Amine wie Triethylamin oder vorzugsweise Triethylendiamin, N(3-Aminopropyl)imidazol oder Bis(N,N-Dimethylaminoethyl)ether.

Die Katalysatoren werden vorzugsweise in einer Menge von 0,01 bis 3 Gew.-%, vorzugsweise 0,05 bis 2 Gew.-%, bezogen auf das Gesamtgewicht der Komponenten (b), gegebenenfalls (c) und (d) eingesetzt.

Weiterhin kann der Umsetzung der Komponenten (a) und (b) Vernetzungsmittel (f) zugegeben werden. Bevorzugt werden Verbindungen mit 3- und mehr gegenüber Isocyanaten reaktiven Gruppen und einem Molekulargewicht im Bereich von 60 bis 250 g/mol, verwendet. Beispiele sind Triethanolamin und/oder Glycerin. Das Vernetzungsmittel wird üblicherweise in einer Menge von 0,01 bis 1 Gew.-%, bevorzugt von 0,1 bis 0,8 Gew.-%, bezogen auf das Gesamtgewicht der Komponenten (b), gegebenenfalls (c) und (d) verwendet.

Die Umsetzung der Komponenten (a) und (b) erfolgt gegebenenfalls in Anwesenheit von (g) Hilfs- und/oder Zusatzstoffen, wie z.B. Zellreglern, Trennmitteln, Pigmenten, oberflächenaktiven Verbindungen und/oder Stabilisatoren gegen oxidativen, thermischen, hydrolytischen oder mikrobiellen Abbau.

Gegenstand der Erfindung ist femer ein Verfahren zur Herstellung von Polyurethanschaumstoffen mit einer Dichte von 120 g/L bis weniger als 300 g/L, durch Umsetzung von
a) einer Polyisocyanatkomponente mit
b) einer Polyolkomponente, enthaltend die Bestandteile
   b-1) Polyesterole und
   b-2) Polymerpolyesterole, wobei der Anteil an Polymerpolyesterole (b-2) mehr als 5 bis weniger als 50 Gew.%, bezogen auf das Gesamtgewicht der Komponente (b) beträgt, und
c) gegebenenfalls Kettenverlängerungsmitteln, in Gegenwart von
d) Treibmittel, enthaltend Wasser.

Die oben beschriebenen bevorzugten Ausführungsformen für den erfindungsgemäßen Polyurethanintegralschaumstoff beziehen sich ebenso auf das erfindungsgemäße Verfahren.

Zur Herstellung von Polyurethanschaumstoffen werden im allgemeinen die Komponenten (a) und (b) in solchen Mengen zur Umsetzung gebracht, dass das Äquivalenzverhältnis von NCO-Gruppen zur Summe der reaktiven Wasserstoffatome 1:0,8 bis 1:1,25, vorzugsweise 1:0,9 bis 1:1,15 beträgt. Ein Verhältnis von 1:1 entspricht hierbei einem NCO-Index von 100.

Die erfindungsgemäßen Polyurethanintegraischaumstoffe werden für Lenkräder und bevorzugt für Schuhsohlen, insbesondere für Zwischenschuhsohlen, verwendet.

Neben den erfindungsgemäßen Polyurethanschaumstoffen ist somit eine Schuhsohle, insbesondere eine Zwischenschuhsohle, mit einer Dichte von 120 bis weniger als 300 g/L, enthaltend die erfindungsgemäßen Polyurethanschaumstoffe, Gegenstand der Erfindung. Die vorstehend für die Polyurethanschaumstoffe erläuterten bevorzugten Ausführungsformen beziehen sich ebenfalls auf die erfindungsgemäßen Schuhsohlen.

Die erfindungsgemäßen Schuhsohlen weisen eine niedrige Dichte sowie gute Gebrauchs- und Verarbeitungseigenschaften auf und können daher insbesondere als Schuhsohlen in Sportschuhen verwendet werden.

Die Herstellung der erfindungsgemäßen Schuhsohlen kann separat oder über Direktanspritzung erfolgen. Beide Techniken sind im Stand der Technik bekannt und beispielsweise in Kunststoffhandbuch Band 7, Polyurethane, 3. Auflage, 1993, Carl-Hanser-Verlag, Seite 387 beschrieben.

Gegenstand der Erfindung sind somit femer Sportschuhe, enthaltend die erfindungsgemäßen Schuhsohlen.

Die erfindungsgemäßen Polyurethanschaumstoffe werden durch Umsetzung von Polyurethansystemkomponenten, nämlich der Isocyanatkomponente (a) und der Polyolkomponente (b), die gegebenenfalls noch Kettenverlängerungsmittel (c) enthalten kann, erhalten.

Gegenstand der Erfindung ist daher femer ein Polyurethansystem zur Herstellung der erfindungsgemäßen Polyurethanschaumstoffe, umfassend
a) eine Polyisocyanatkomponente und
b) eine Polyolkomponente, enthaltend die Bestandteile
   b-1) Polyesterole und
   b-2) Polymerpolyesterole, wobei der Anteil an Polymerpolyesterolen (b-2) 5 bis weniger als 50 Gew.%, bezogen auf das Gesamtgewicht der Komponente (b) beträgt, sowie gegebenenfalls
c) Kettenverlängerungsmitteln.
   Für das Polyurethansystem gelten die vorstehend gemachten Erläuterungen zu bevorzugten Ausführungsformen.

Die Erfindung soll durch nachfolgende Beispiele veranschaulicht werden.

### Beispiele

Verwendete Einsatzstoffe:
Polyol 1: Polyesterol auf Basis von Adipinsäure und einer Mischung aus Ethylenglykol und 1,4-Butandiol im molaren Verhältnis 2:1, OH-Zahl= 80 mg KOH/g, Viskosität bei 75 °C = 300mPas, gemessen nach DIN 53015
Polyol 2: Polyesterol auf Basis von Adipinsäure und einer Mischung aus Ethylenglykol und 1,4-Butandiol Im molaren Verhältnis 2:1, OH-Zahl= 56 mg KOH/g, Viskosität bei 75 °C = 650 mPas
Polyol 3: Hoopol PM245 der Firma Hoocker, Polymerpolyesterol mit einem Feststoffgehalt von 20 %, OH-Zahl = 60 mg KOH/g
Polyol 4: Lupranol 4800 der Firma Elastogran; Polymerpolyetherol mit einem Feststoffgehalt von 45 %, OH-Zahl = 20 mg KOH/g.
KV: Ethylenglykol
Kat 1: Amin-Katalysator
Vernetzer: Triethylendiamin (85 % in Diethanolamin)
Stabilisator: Zellstabilisator auf Basis eines Silikons
Iso 187/2: lsoeyanat-Prepolymer der Firma Elastogran auf Basis von 4,4'-MDI, modifizierten Isocyantaten und einem Polyesterol mit einer Funktionalität > 2 und OH-Zahl von 60 mg KOH/g; NCO-Gehalt= 23 %
ESB 260: Isocyanat-Prepolymer auf Basis von 4,4'-MDI, modifizierten Isocyantaten und einem Gemisch von Polydsterolen mit einer mittleren Funktionalität > 2 und einer mittleren OH-Zahl von 60 mg KOH/g; NCO-Gehalt= 23 %

### Herstellung der Integralschaumstoffe:

Die A- und B-Komponenten werden in den in den Beispielen beschriebenen Mischungsverhältnissen bei 23°C intensiv vermischt und die Mischung in ein auf 50°C temperiertes, plattenförmiges Formwerkzeug aus Aluminium mit den Abmessungen 20 x 20 x 1 cm in einer solchen Menge eingebracht, dass nach dem Aufschäumen und Aushärten im geschlossenen Formwerkzeug eine Integralschaumplatte der Dichte 250 g/L resultiert.

**Tabelle 1: Übersicht Zusammensetzung der Beispiele**

| **Exp.** | **1** | **2** | **V1** | **V2** |
|---|---|---|---|---|
| **A** | | | | |
| Polyol 1 | 61,6 | 63,2 | 61,6 | - |
| Polyol 2 | - | - | - | 61,6 |
| Polyol 3 | 30,0 | 30,0 | - | 30,0 |
| Polyol 4 | - | - | 30,0 | - |
| KV | 6,0 | 5,5 | 6,0 | 6,0 |
| Aminkatalysator | 1,1 | 1,6 | 1,1 | 1,1 |
| Wasser | 1,0 | 0,8 | 1,0 | 1,0 |
| Vernetzer | 0,2 | 0,5 | 0,2 | 0,2 |
| Stabilisator | 0,1 | 0,1 | 0,1 | 0,1 |

| **B** | Iso 187/2 | ESB 260 | Iso 187/2 | Iso 187/2 |
|---|---|---|---|---|
| NCO-Gehalt | 23 | 22 | 23 | 23 |

Ergebnisse:
1+2: Die erfindungsgemäße Zusammensetzung ergeben feinzellige Formkörper ohne Oberflächendefekte aufgrund von z.B. Einfallstellen. Die Formkörper sind dimensionsstabil, d.h. weisen keine Veränderungen der geometrischen Abmessungen nach Entformung auf.
V1: Die Schäume weisen eine grobe Zellstruktur auf. Die Formkörper haben eine unzureichende Oberfläche.
V2: Die Prüfplatten weisen Oberflächendefekte auf.

## Patentansprüche

1. Polyurethanschaumstoff mit einer Dichte von 120 g/L bis weniger als 300 g/L, erhältlich durch Umsetzung von
a), einer Polyisocyanatkomponente mit
b) einer Polyolkomponente, enthaltend die Bestandteile
b-1) Polyesterole mit einer Viskosität von 150 mPas bis 600 mPas, gemessen nach DIN 53015 bei 75 °C, und
b-2) Polymerpolyesterole, wobei der Anteil an Polymerpolyesterole (b-2) mehr als 5 Gew.-%, bezogen auf das Gesamtgewicht der Komponente (b) beträgt, und
c) gegebenenfalls Kettenverlängerungsmitteln, in Gegenwart von
d) Treibmittel, enthaltend Wasser,
wobei keine Schwefelatome aufweisenden Polesterole oder Polymerpolyesterole bei der Umsetzung enthalten sind.

2. Polyurethanschaumstoff nach Anspruch 1, **dadurch gekennzeichnet, dass** die Komponente (a) Polyisocyanatprepolymere umfasst, die erhältlich sind durch Umsetzung von
(a-1) Polyisocyanaten mit
(a-2) verzweigten Polyesterolen.

3. Polyurethanschaumstoff nach Anspruch 1 oder 2, **dadurch gekennzeichnet, dass** die Komponente (b-1) eine Viskosität von 200 mPas bis 500 mPas, gemessen nach DIN 53015 bei 75 °C, aufweist.

4. Polyurethanschaumstoff nach einem der Ansprüche 1 bis 3, **dadurch gekennzeichnet, dass** Wasser als alleiniges Treibmittel eingesetzt wird.

5. Polyurethanschaumstoff nach einem der Ansprüche 1 bis 4, **dadurch gekennzeichnet, dass** Wasser (d) in einer Menge von 0,6 bis 3 Gew.-%, bezogen auf das Gesamtgewicht der Komponenten (b) und (c), eingesetzt wird.

6. Polyurethanschaumstoff nach einem der Ansprüche 1 bis 5, **dadurch gekennzeichnet, dass** es sich um einen Polyurethanweichintegralschaumstoff handelt.

7. Schuhsohle, enthaltend einen Polyurethanschaumstoff gemäß einem der Ansprüche 1 bis 6.

8. Verfahren zur Herstellung von Polyurethanschaumstoffen mit einer Dichte von 120 g/l bis weniger als 300 g/l, durch Umsetzung von
a) einer Polyisocyanatkomponente mit
b) einer Polyolkomponente, enthaltend die Bestandteile
b-1) Polyesterole mit einer Viskosität von 150 mPas bis 600 mPas, gemessen nach DIN 53015 bei 75 °C, und
b-2) Polymerpolyesterole, wobei der Anteil an Polymerpolyesterole (b-2) mehr als 5 Gew.-%, bezogen auf das Gesamtgewicht der Komponente (b) beträgt, und
c) gegebenenfalls Kettenverlängerungsmitteln, in Gegenwart von
d) Wasser als Treibmittel.
wobei keine Schwefelatome aufweisenden Polesterole oder Polymerpolyesterole bei der Umsetzung enthalten sind.

9. Verwendung eines Polyurethanschaumstoffs gemäß einem der Ansprüche 1 bis 7 zur Herstellung von Schuhsohlen.

10. Polyurethansystem zur Herstellung eines Polyurethanschaumstoffs nach einem der Ansprüche 1 bis 7, umfassend
a) eine Polyisocyanatkomponente und
b) eine Polyolkomponente, enthaltend die Bestandteile
b-1) Polyesterole und
b-2) Polymerpolyesterole, wobei der Anteil an Polymerpolyesterole (b-2) mehr als 5 Gew.-%, bezogen auf das Gesamtgewicht der Komponente (b) beträgt, sowie gegebenenfalls
c) Kettenverlängerungsmitteln,
wobei keine Schwefelatome aufweisenden Polyesterole oder Polymerpolyesterole bei der Umsetzung enthalten sind.

## Claims

1. A polyurethane foam with density of from 120 g/L to less than 300 g/L, obtainable via reaction of
a) a polyisocyanate component with
b) a polyol component, comprising the following constituents:
b-1) polyesterols with viscosity of from 150 mPas to 600 mPas, measured to DIN 53015 at 75°C, and
b-2) polymer polyesterols, where the proportion of polymer polyesterols (b-2) is more than 5% by weight based on the total weight of component (b), and
c) if appropriate, chain extenders, in the presence of
d) blowing agent comprising water,
where no polymer polyesterols or polyesterols having sulfur atoms are present during the reaction.

2. The polyurethane foam according to claim 1, wherein component (a) comprises polyisocyanate prepolymers obtainable via reaction of
(a-1) polyisocyanates with
(a-2) branched polyesterols.

3. The polyurethane foam according to claim 1 or 2, wherein component (b-1) has viscosity of from 200 mPas to 500 mPas, measured to DIN 53015 at 75°C.

4. The polyurethane foam according to any of claims 1 to 3, wherein water is the only blowing agent used.

5. The polyurethane foam according to any of claims 1 to 4, wherein the amount used of water (d) is from 0.6 to 3% by weight, based on the total weight of components (b) and (c).

6. The polyurethane foam according to any of claims 1 to 5, which is a flexible integral polyurethane foam.

7. A shoe sole comprising a polyurethane foam according to any of claims 1 to 6.

8. A process for production of polyurethane foams with density of from 120 g/L to less than 300 g/L, via reaction of
a) a polyisocyanate component with
b) a polyol component, comprising the following constituents:
b-1) polyesterols with viscosity of from 150 mPas to 600 mPas, measured to DIN 53015 at 75°C, and
b-2) polymer polyesterols, where the proportion of polymer polyesterols (b-2) is more than 5% by weight based on the total weight of component (b), and
c) if appropriate, chain extenders, in the presence of
d) water as blowing agent,
where no polymer polyesterols or polyesterols having sulfur atoms are present during the reaction.

9. The use of a polyurethane foam according to any of claims 1 to 7 for production of shoe soles.

10. A polyurethane system for production of a polyurethane foam according to any of claims 1 to 7, comprising
a) a polyisocyanate component and
b) a polyol component, comprising the following constituents:
b-1) polyesterols and
b-2) polymer polyesterols, where the proportion of polymer polyesterols (b-2) is more than 5% by weight, based on the total weight of component (b), and also, if appropriate,
c) chain extenders,
where no polymer polyesterols or polyesterols having sulfur atoms are present during the reaction.

## Revendications

1. Mousse de polyuréthanne d'une densité de 120 g/l jusqu'à moins de 300 g/l, qu'on obtient par réaction de :
a) un composant de polyisocyanate avec
b) un composant de polyol contenant les constituants :
b-1) polyestérols d'une viscosité de 150 mPas à 600 mPas, mesurée selon la norme DIN 53015 à 75 °C, et
b-2) polyestérols polymères, la fraction de polyestérols polymères (b-2) étant de plus de 5 % en poids, sur base du poids total du composant b), et
c) éventuellement des agents élongateurs de chaîne en présence d'un
d) agent moussant contenant de l'eau
aucun polyestérol présentant des atomes de soufre ou de polyestérol polymère n'étant contenu lors de la réaction.

2. Mousse de polyuréthanne selon la revendication 1, **caractérisée en ce que** le composant (a) comprend des prépolymères de polyisocyanate qu'on peut obtenir par réaction de :
(a-1) polyisocyanates avec
(a-2) des polyestérols ramifiés.

3. Mousse de polyuréthanne selon la revendication 1 ou 2, **caractérisée en ce que** le composant (b-1) présente une viscosité de 200 mPas à 500 mPas, mesurée selon la norme DIN 53015 à 75 °C.

4. Mousse de polyuréthanne selon l'une des revendications 1 à 3, **caractérisée en ce que** l'eau est utilisée comme seul agent moussant.

5. Mousse de polyuréthanne selon l'une des revendications 1 à 4, **caractérisée en ce que** l'eau (d) est utilisée dans une quantité de 0,6 à 3 % en poids, sur base du poids total des composants (b) et (c).

6. Mousse de polyuréthanne selon l'une des revendications 1 à 5, **caractérisée en ce qu'**il s'agit d'une mousse intégrale souple de polyuréthanne.

7. Semelle pour chaussure contenant une mousse de polyuréthanne selon l'une des revendications 1 à 6.

8. Procédé de fabrication de mousses de polyuréthanne avec une densité de 120 g/l jusqu'à moins de 300 g/l, par réaction de :
a) un composant de polyisocyanate avec
b) un composant de polyol contenant les constituants:
b-1) polyestérols avec une viscosité de 150 mPas à 600 mPas, mesurée selon la norme DIN 53015 à 75 °C, et
b-2) polyestérols polymères, la fraction de polyestérols polymères (b-2) étant de plus de 5 % en poids, sur base du poids total du composant b), et
c) éventuellement des agents élongateurs de chaîne en présence de
d) l'eau comme agent moussant
aucun polyestérol présentant des atomes de soufre ou de polyestérol polymère n'étant contenu lors de la réaction.

9. Utilisation d'une mousse de polyuréthanne selon l'une des revendications 1 à 7 pour la fabrication de semelles pour chaussure.

10. Système de polyuréthanne de fabrication d'une mousse de polyuréthanne selon l'une des revendications 1 à 7, comprenant :
a) un composant de polyisocyanate et
b) un composant de polyol contenant les constituants :
b-1) polyestérols et
b-2) polyestérols polymères, la fraction de polyestérols polymères (b-2) étant de plus de 5 % en poids, sur base du poids total du composant b), et éventuellement
c) des agents élongateurs de chaîne
aucun polyestérol présentant des atomes de soufre ou de polyestérol polymère n'étant contenu lors de la réaction.
